# FASCICULE DE BREVET EUROPEEN

(11) **EP 0 768 958 B1**
(45) Date de publication et mention de la délivrance du brevet: **11.11.1998**
(21) Numéro de dépôt: 95924320.5
(22) Date de dépôt: 23.06.1995
(51) Int. Cl.: B60C 11/12

(54) **BANDE DE ROULEMENT POUR PNEUMATIQUE**
REIFENLAUFFLÄCHE
TYRE TREAD

(30) Priorité: 05.07.1994 FR 9408377
(43) Date de publication de la demande: 23.04.1997
(73) Titulaire: COMPAGNIE GENERALE DES ETABLISSEMENTS MICHELIN - MICHELIN & CIE, 63040 Clermont-Ferrand Cédex (FR)
(72) Inventeur: LAGNIER, Alain, F-63540 Romagnat (FR)
(74) Mandataire: Devaux, Edmond-Yves
(86) Numéro de dépôt international: EP9502455
(87) Numéro de publication internationale: WO9601189

(56) Documents cités:
- EP-A- 0 282 765
- EP-A- 0 515 349
- DE-A- 1 959 370
- GB-A- 1 150 295

## Description

La présente invention concerne la bande de roulement d'un pneumatique destiné à rouler sur des sols enneigés, verglacés ou mouillés.

Une telle bande de roulement est généralement pourvue d'éléments en relief nervures ou blocs, séparés les uns des autres dans le sens circonférentiel et/ou dans le sens transversal par des rainures transversales et/ou circonférentielles, et munis de nombreuses incisions ou fentes, dont les largeurs non nulles sont très inférieures aux largeurs desdites rainures transversales et circonférentielles.

De nombreux types d'incisions ont été proposés en vue d'améliorer l'adhérence du pneumatique sur les sols considérés. Comme connu par le brevet FR 2 418 719, lesdites incisions peuvent être normales à la surface de la bande de roulement, ou inclinées par rapport à la direction perpendiculaire à ladite surface. Ce document précise ce qu'il faut entendre par le mot fente ou incision, une fente ou incision n'étant pas seulement une fente rectiligne dans le sens de sa profondeur et/ou de sa longueur, mais aussi une fente ayant un tout autre tracé, par exemple curviligne, ondulé...etc..., quel que soit le plan de coupe (longitudinal, transversal, ou oblique) considéré.

Le brevet FR 791 250 montre un exemple de fente ou d'incision présentant un tracé ondulé sur la surface de bande de roulement et de même un tracé ondulé dans tout plan de coupe ne contenant pas une génératrice de la surface ondulée des parois de l'incision.

Le brevet FR 2 025 124 décrit de même des incisions dont les surfaces de parois ne sont pas des surfaces planes, mais présentent un relief, bien que restant sensiblement parallèles entre elles, quel que soit le tracé obtenu sur tout plan de coupe. L'incision montrée sur ce document a la particularité d'avoir une surface ondulée à génératrices circulaires, comparativement à l'incision montrée sur le document précédent où la surface ondulée est dite à génératrices rectilignes, lesdites génératrices étant parallèles entre elles dans les deux cas.

Il est aisément imaginable de concevoir, entre ces deux extrêmes, des parois d'incision présentant un relief pour lequel les génératrices seraient, par exemple, ondulées ou en zigzag, le relief ressemblant alors à une succession de crêtes séparées par des creux, crêtes et creux étant ondulés, en zigzag, ou en lignes brisées dans le sens de leurs longueurs. Un tel pneumatique, correspondant au préambule de la revendication 1, est montré par le brevet EP-A-0 515 349.

Les incisions décrites ci-dessus présentent un facteur d'anisotropie et leurs déformations ne sont pas identiques, quelles que soient les orientations des forces imposées. Il s'ensuit des déplacements des parois d'incisions, l'une par rapport à l'autre, différents selon les directions des efforts imposés, ce qui influe non seulement sur les rigidités des éléments en relief pourvus de telles incisions, mais aussi sur les performances relatives au comportement du véhicule équipé telles que la tenue de cap, la maniabilité du véhicule, la fermeté de réponse aux impulsions données au volant de direction et/ou encore l'enroulement en virages.

Il est peut être intéressant dans certains cas d'améliorer lesdites performances, tout en conservant un tracé d'incision, que ce soit sur la surface de la bande de roulement ou en profondeur pouvant se représenter par une fonction périodique et ainsi obtenir des propriétés optimales des éléments en relief de la bande de roulement tout au long de la durée de vie du pneumatique. A cet effet, l'invention propose de munir au moins certains éléments en relief de la bande de roulement d'au moins une incision dont les parois se faisant face présentent chacune une surface en relief, formée de saillies et de cavités disposées de part et d'autre d'une surface moyenne de paroi, lesdites saillies et cavités ayant chacune, sur ladite surface moyenne, une base quadrilatère et, distant de ladite surface, un sommet, la base d'une saillie étant complètement entourée de bases de cavités, et réciproquement la base d'une cavité étant complètement entourée de bases de saillies, les deux surfaces, respectivement des deux parois, étant identiques de manière à former l'incision avec la largeur désirée.

Les saillies sont disposées d'un côté de la surface moyenne de la paroi, les cavités sont disposées de l'autre côté et ladite surface moyenne est le lieu géométrique de toutes les bases de saillies et de cavités.

Préférentiellement, et pour faciliter la fabrication des lamelles de métal du moule, destiné à vulcaniser la bande de roulement conforme à l'invention, la surface dite moyenne est un plan.

Les saillies et cavités auront préférentiellement des formes géométriques semblables. Si ces protubérances peuvent avoir des sommets séparés du plan moyen par des distances différentes entre elles, elles auront avantageusement, pour les mêmes raisons de coût de fabrication, des formes identiques, le plan moyen devenant alors plan médian.

Les bases respectives des saillies et cavités peuvent être des carrés, des rectangles, des trapèzes, des losanges, c'est-à-dire des quadrilatères réguliers. Quant aux courbes joignant respectivement les sommets de saillies ou cavités aux bases correspondantes, elles seront avantageusement des arcs de cercle, des demi-paraboles, des segments de droite, ou des portions de sinusoïde, par exemple une portion correspondant à une demi-période de crête-à-crête.

Les parois des lamelles de caoutchouc vulcanisé délimitées par les incisions conformes à l'invention sont ainsi pourvues de formes géométriques, les faces de chacune joignant la base au sommet présentant un angle aigu avec la surface de bande de roulement et/ou plus particulièrement avec tout plan perpendiculaire à ladite surface, contrairement aux parois d'incisions décrites dans le brevet GB 1 150 295, où le saillies et cavités ne sont que des troncs de prisme à base losangique. Ce type de formes ne permet pas, comme dans le cas de la présente invention, d'obtenir sous l'effet de la charge appliquée à une lamelle de caoutchouc entre incisions, naissance d'un effort tangentiel induit par ladite inclinaison des incisions, effort tangentiel qui est source d'amélioration de l'adhérence du pneumatique sur sols glissants, mouillés et/ou verglacées, et qui a un effet non négligeable sur les phénomènes d'usure irrégulière.

Les caractéristiques de l'invention ressortiront de la description qui va suivre, faite en regard du dessin annexé et donnant à titre explicatif mais non limitatif plusieurs formes de réalisation, conformes à l'invention.

Sur ce dessin,
- la figure 1 est, selon une première variante, une vue schématique et en perspective d'une paroi d'une incision conforme à l'invention,
- la figure 2 est une vue schématique agrandie d'une partie d'une paroi d'incision semblable à celle montrée sur la figure 1,
- la figure 3 est une vue schématique et en perspective d'une paroi d'incision selon une deuxième variante conforme à l'invention.
- la figure 4 est une vue schématique et en perspective d'une autre variante,
- la figure 5 est une vue schématique et en perspective agrandie d'une partie de paroi selon une quatrième variante d'incision conforme à l'invention,
- la figure 6 est une vue schématique agrandie d'une partie de paroi selon une cinquième variante, très proche de celle montrée sur la figure 5.

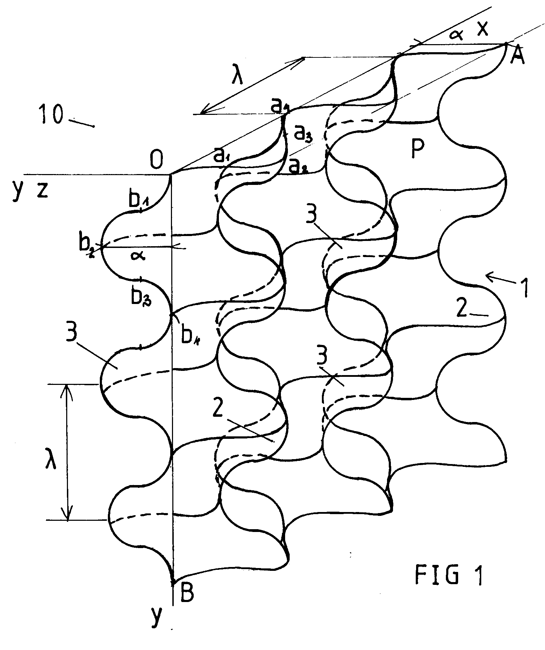

Sur la figure 1 est montrée en perspective la paroi P d'une incision (1), un élément en relief de la bande de roulement (10), conforme à l'invention, pouvant être munie d'une ou plusieurs incisions (1) de ce type. Cette paroi P, en trois dimensions, peut être considérée comme une surface en relief ondulée dans deux directions Ox et Oy, ces ondulations se caractérisant par des saillies (2) et des cavités (3), situées de part et d'autre du plan médian xOy de la paroi P. Ces saillies et cavités ont une forme de dômes, engendrés par la translation, le long du tracé OA de la paroi P sur la surface de la bande de roulement, du tracé OB de la paroi en profondeur dans un plan perpendiculaire à la surface de la bande de roulement et à l'axe moyen dudit tracé, les deux tracés étant, dans l'exemple décrit, identiques entre eux et ondulés. Ces deux tracés sont formés par la succession de quarts de cercle Oa₁, a₁a₂, a₂a₃, a₃a₄....pour le tracé OA, et Ob₁, b₁b₂, b₂b₃, b₃b₄....pour le tracé OB. Ces deux tracés, dits ondulés circulairement, ont chacun, par convention de langage et bien que non sinusoïdaux au sens propre du terme, la même amplitude α et la même longueur d'onde λ.

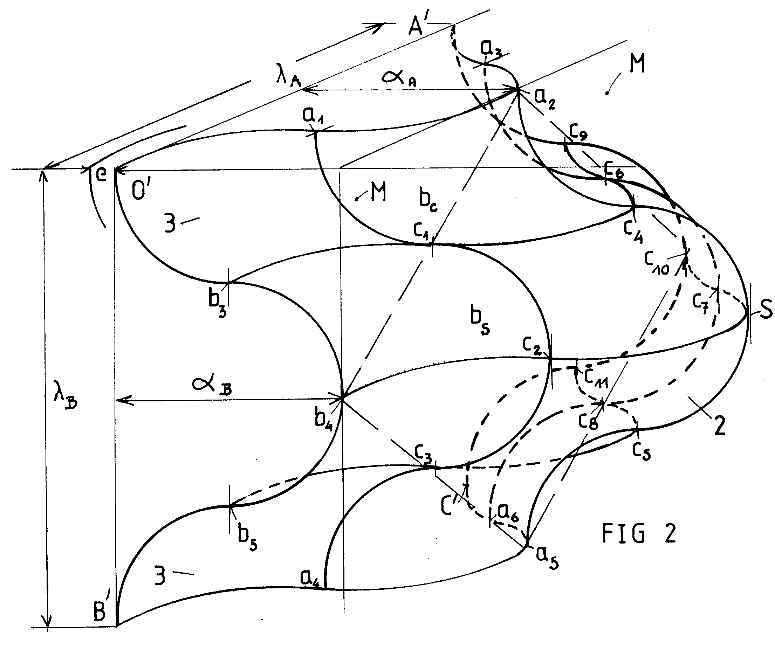

La figure 2 représente en vue agrandie la forme géométrique d'une seule saillie (2), alors que les quatre cavités environnantes ne sont représentées qu'en partie. La surface en relief ainsi montrée correspond à la translation le long du tracé O'A', d'amplitude α_{A} et dont la longueur O'A' est égale à la longueur d'onde λ_{A} (bien que le tracé ne soit pas théoriquement sinusoïdal), du tracé en profondeur O'B' d'amplitude α_{B}, égale à α_{A} dans l'exemple décrit (mais pouvant être différente dans d'autres cas), et de longueur O'B' égale à la longueur d'onde λ_{B}, égale à λ_{A}. On obtient ainsi, dans un plan parallèle à la surface de bande de roulement et contenant le point b₃ du tracé en profondeur un tracé b₃c₁c₄c₆c₉, dans un plan parallèle à la surface de bande de roulement et contenant le point b₄ du tracé en profondeur un tracé b₄c₂Sc₇c₁₀, de même dans le plan contenant le point b₅ un tracé b₅c₃c₅c₈c₁₁, et dans le plan contenant le point B' le tracé B'a₄a₅a₆C'. La surface moyenne est un plan moyen M, plan qui est aussi médian par le fait que les sommets S des saillies et les sommets des cavités O', A', B', C', sont équidistants dudit plan M, la distance commune étant égale à l'amplitude commune α_{A}, α_{B} des deux tracés O'A' et O'B' de l'incision, respectivement sur la surface de la bande de roulement et en profondeur. Si nous considérons la saillie (2) de sommet S, elle possède sur le plan médian M une base a₂b₄a₅c₁₀, base b_{S} qui est, dans le cas décrit, carrée. Le côté a₂b₄ est aussi le côté de la base carrée b_{C} correspondante à la cavité (3) de sommet O'. De même, les côtés b₄a₅, a₅c₁₀, c₁₀a₂ sont aussi les côtés des bases b_{C} des cavités (3) respectivement de sommet B', C', A', bases qui entourent la base correspondante à la saillie (2) de sommet S. Quant à la forme d'une saillie (2) ou d'une cavité (3), elle est composée d'une part de la base et d'autre part de quatre faces courbes, qui sont convexes pour ce qui est des parties proches du sommet et concaves pour ce qui est des parties proches de la base.

Une seule paroi a été reproduite sur les figures 1 et 2 pour la clarté du dessin. L'autre paroi P', destinée à former l'incision a une forme identique à la paroi P : elle est simplement distante de la paroi P de la largeur e de l'incision (figure 2).

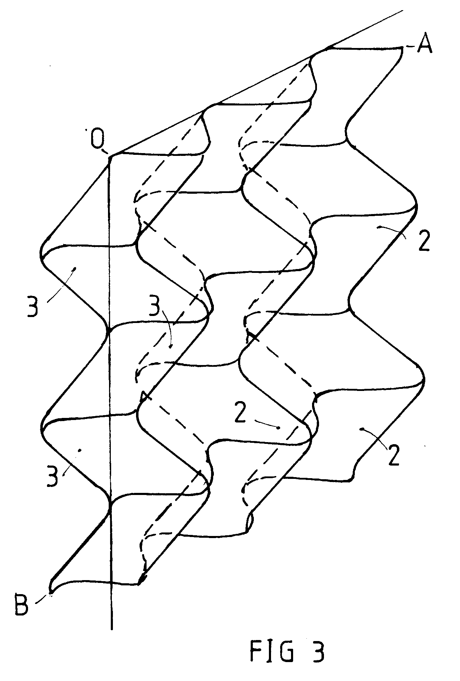

La figure 3 représente une variante correspondant à une paroi P d'incision (1) formée de saillies (2) et de cavités (3) sous forme de tétraèdres à sommets arrondis, générés par la translation, le long du tracé OA sur la bande de roulement en forme de zigzag à sommet arrondi (suite de segments de droite réunis par des arcs de cercle), d'un tracé en profondeur OB de même forme que le tracé OA, amplitudes et longueurs d'onde étant égales pour les deux tracés

Rentre aussi dans le cadre de l'invention une incision (1) générée par la translation le long d'un tracé OA sur la bande de roulement ondulé circulairement, sinusoïdalement ou autre, ou en zigzag, possédant une amplitude α_{A} et une longueur d'onde λ_{A}, d'un tracé en profondeur non identique au tracé OA et différent par sa longueur d'onde λ_{B}, et/ou par son amplitude α_{B}.

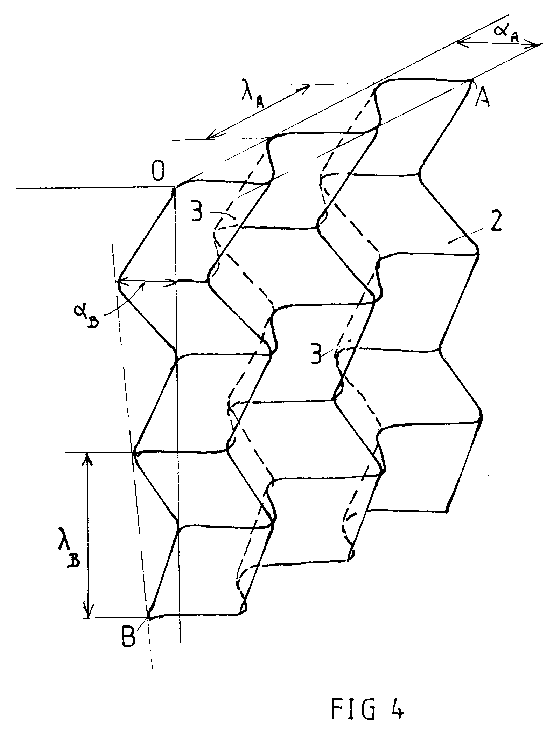

Une incision, conforme à l'invention, peut aussi avoir, sur la surface de bande de roulement un tracé OA ondulé circulairement, sinusoïdalement ou autre, ou en zigzag, dont l'amplitude α_{A} et la longueur d'onde λ_{A} sont constantes sur toute la longueur du tracé, et en profondeur un tracé ondulé ou en zigzag mais dont l'amplitude α_{B} est, par exemple décroissante en fonction de la profondeur et ce à longueur d'onde constante. La figure 4 représente une telle incision, où l'amplitude α_{B} est inversement proportionnelle à la profondeur de l'incision (1) alors que la longueur d'onde λ_{B} reste constante. Les saillies (2) et les cavités (3) ont la forme de tétraèdres à sommets arrondis, lesdits sommets étant plus proches les uns des autres dans la partie basse de l'incision.

Rentre aussi dans le cadre de l'invention une incision (1) générée par la translation le long d'un tracé OA sur la bande de roulement ondulé circulairement, sinusoïdalement ou autre, ou en zigzag, possédant une amplitude α_{A} et une longueur d'onde λ_{A}, d'un tracé en profondeur d'amplitude α_{B} constante et de longueur d'onde λ_{B} variable en fonction de la profondeur

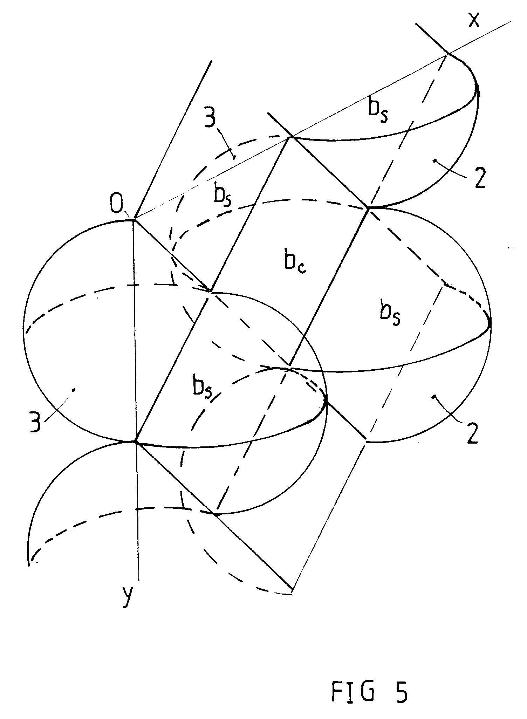

La figure 5 représente une paroi P d'une incision (1), conforme à l'invention, ne correspondant plus, comme dans les cas précédents, à des tracés sur la surface de bande de roulement et en profondeur de forme ondulée ou zigzag, tout en étant constitués d'une succession de demi-cercles. La paroi (1) est formée de saillies (2) dont les bases dans le plan xOy sont, par exemple, des rectangles. Pour plus de clarté, ne sont montrées que trois saillies (2) dont les bases b_{S} entourent une base b_{C} de cavité (3).

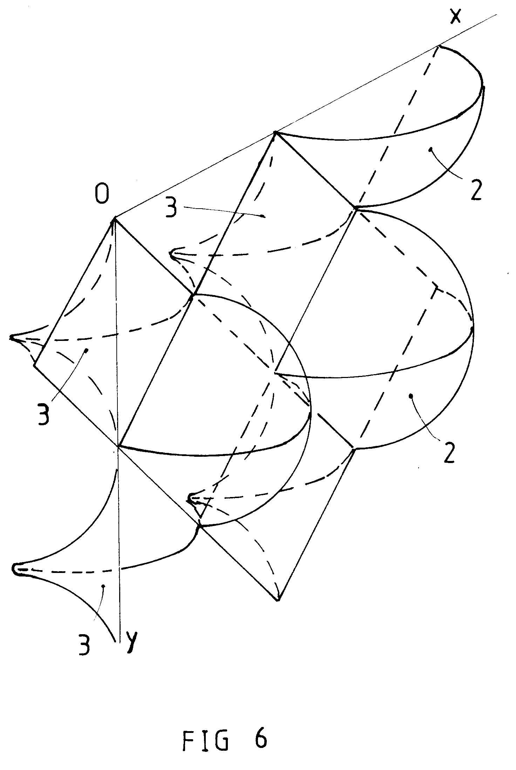

Dans le cas de la figure 5, saillies et cavités ont la même forme géométrique, que l'on peut définir comme formée de la base et de quatre faces courbes convexes. Dans le cas de la figure 6, si les saillies (2) ont toujours des faces courbes convexes, les cavités (3) ont des faces courbes concaves, ce qui permet de retrouver en profondeur, et donc après usure et à quelque niveau que ce soit, le même tracé que le tracé sur la surface de bande de roulement, alors qu'une incision telle que montrée sur la figure 5 ne le permet pas.

## Revendications

1. Bande de roulement (10) pour pneumatique, comprenant des éléments en relief pourvus d'incisions (1), au moins certains éléments en relief étant munis d'au moins une incision (1) dont les parois P se faisant face présentent chacune une surface en relief, formée de saillies (2) et de cavités (3) disposées de part et d'autre d'une surface moyenne de paroi, les deux surfaces en relief respectivement des deux parois P étant identiques de manière à former l'incision (1) avec la largeur désirée e, caractérisée en ce que lesdites saillies (2) et cavités (3) ont chacune sur ladite surface moyenne M une base quadrilatère (b_{S}, b_{C}) et un sommet (S, O', A', B', C'), distant de ladite surface, la base b_{S} d'une saillie (2) étant complètement entourée de bases b_{C} de cavités (3), et réciproquement la base b_{C} d'une cavité (3) étant complètement entourée de bases b_{S} de saillies (2).

2. Bande roulement selon la revendication 1, caractérisée en ce que les saillies (2) et les cavités (3) ont des formes géométriques identiques.

3. Bande de roulement selon la revendication 2, caractérisée en ce que l'incision (1) présente respectivement, sur la bande de roulement (10) et sur toute surface parallèle à ladite surface de bande de roulement (10) et en profondeur sur tout plan perpendiculaire à la surface de bande de roulement et à l'orientation moyenne du tracé sur la bande de roulement, des tracés ondulés (OA, OB) dont les amplitudes respectives sont égales entre elles et à α, et dont les longueurs respectives sont égales entre elles et à λ, les saillies (2) et les cavités (3) étant formées chacune par une base (b_{S}, b_{C}) et quatre faces courbes convexes vers le sommet et devenant concaves vers la base.

4. Bande de roulement selon la revendication 3, caractérisée en ce que les tracés sont ondulés circulairement.

5. Bande de roulement selon la revendication 3, caractérisée en ce que les tracés sont ondulés sinusoïdalement.

6. Bande de roulement selon la revendication 2, caractérisée en ce que les tracés (OA, OB) de l'incision (1), d'une part sur la bande de roulement (10) et d'autre part en profondeur, sont des tracés en zigzag de même longueur d'onde λ et de même amplitude α, les saillies (2) et cavités (3) étant des tétraèdres à sommets arrondis.

7. Bande de roulement selon la revendication 1, caractérisée en ce que l'incision (1) a, sur la surface de bande de roulement, un tracé OA ondulé circulairement, sinusoïdalement ou autre, ou en zigzag, possédant une amplitude α_{A} et une longueur d'onde λ_{A}, et, en profondeur, un tracé OB non identique au tracé OA et différent par sa longueur d'onde λ_{B}, et/ou par son amplitude α_{B}.

8. Bande roulement selon la revendication 1, caractérisée en ce que l'incision (1) a sur la surface de bande de roulement un tracé OA ondulé circulairement, sinusoïdalement ou autre, ou en zigzag, dont l'amplitude α_{A} et la longueur d'onde λ _{A} sont constantes sur toute la longueur du tracé, et en profondeur un tracé OB ondulé ou en zigzag mais dont l'amplitude α_{B} est décroissante en fonction de la profondeur et ce à longueur d'onde λ_{B} constante.

9. Bande de roulement selon la revendication 1, caractérisée en ce que les saillies (2) et cavités (3) à base quadrilatère ont chacune quatre faces courbes entièrement convexes.

10. Bande de roulement selon la revendication 1, caractérisée en ce que les saillies (2) ont quatre faces courbes entièrement convexes et les cavités (3) quatre faces courbes entièrement concaves.

## Claims

1. A tread (10) for a tyre, comprising elements in relief provided with incisions (1), at least some elements in relief being provided with at least one incision (1), the facing walls P of which each have a surface in relief, formed of protrusions (2) and cavities (3) arranged on either side of a central wall surface, the two surfaces in relief respectively of the two walls P being identical so as to form the incision (1) with the desired width e, characterised in that said protrusions (2) and cavities (3) each have on said central surface M a quadrilateral base (b_{S}, b_{C}) and a vertex (S, O', A', B', C') distant from said surface, the base b_{S} of a protrusion (2) being completely surrounded by bases b_{C} of cavities (3), and reciprocally the base b_{C} of a cavity (3) being completely surrounded by bases b_{S} of protrusions (2).

2. A tread according to Claim 1, characterised in that the protrusions (2) and the cavities (3) are of identical geometric shapes.

3. A tread according to Claim 2, characterised in that the incision (1) has respectively, on the tread (10) and on any surface parallel to said tread surface (10) and in depth on any plane perpendicular to the tread surface and to the average orientation of the trace on the tread, undulating traces (OA, OB), the respective amplitudes of which are equal to one another and to α, and the respective lengths of which are equal to one another and to λ, the protrusions (2) and the cavities (3) each being formed by a base (b_{S}, b_{C}) and four curved faces which are convex towards the vertex and become concave towards the base.

4. A tread according to Claim 3, characterised in that the traces are circularly undulating.

5. A tread according to Claim 3, characterised in that the traces are sinusoidally undulating.

6. A tread according to Claim 2, characterised in that the traces (OA, OB) of the incision (1), firstly on the tread (10) and secondly in depth, are zigzag traces of the same wavelength λ and of the same amplitude α, the protrusions (2) and cavities (3) being tetrahedra having rounded vertices.

7. A tread according to Claim 1, characterised in that the incision (1) has, on the tread surface, a trace OA which is circularly, sinusoidally or otherwise undulating, or a zigzag, having an amplitude α_{A} and a wavelength λ_{A}, and, in depth, a trace OB which is not identical to the trace OA and is different by its wavelength λ_{B}, and/or by its amplitude α_{B}.

8. A tread according to Claim 1, characterised in that the incision (1) has, on the tread surface, a trace OA which is circularly, sinusoidally or otherwise undulating, or a zigzag, the amplitude α_{A} and the wavelength λ_{A} of which are constant over the entire length of the trace, and, in depth, a trace OB which is undulating or zigzag, but the amplitude α_{B} of which decreases as a function of the depth, at a constant wavelength λ_{B}.

9. A tread according to Claim 1, characterised in that the protrusions (2) and cavities (3) of quadrilateral base each have four curved faces which are entirely convex.

10. A tread according to Claim 1, characterised in that the protrusions (2) have four curved faces which are entirely convex and the cavities (3) four curved faces which are entirely concave.

## Patentansprüche

1. Lauffläche (10) für einen Luftreifen, mit reliefartigen Elementen, die mit Einschnitten (1) versehen sind, wobei mindestens bestimmte reliefartige Elemente mit mindestens einem Einschnitt (1) versehen sind, wovon die Wände P, die die Stirnfläche bilden, jeweils eine reliefartige Oberfläche darbieten, die von Vorsprüngen (2) und Aussparungen (3) gebildet ist, die beiderseits einer Mittelfläche der Wand angeordnet sind, und wobei die beiden reliefartigen Oberflächen jeweils zweier Wände P derart identisch sind, daß, sie den Einschnitt (1) mit der gewünschten Breite bilden,
**dadurch gekennzeichnet, daß**
die genannten Vorsprünge (2) und Hohlräume (3) jeweils auf der genannten Mittelfläche M eine vierseitige Basis (b_{S}b_{C}) sowie einen zur genannten Fläche beabstandeten Scheitel (S, O', A', B', C') aufweisen, wobei die Basis b_{S} eines Vorsprungs (2) vollkommen von Basen b_{C} von Aussparungen (3) umgeben ist und umgekehrt die Basis b_{C} einer Aussparung (3) vollständig von Basen b_{S} von Vorsprüngen (2) umgeben ist.

2. Lauffläche nach Anspruch 1, dadurch gekennzeichnet,
daß, die Vorsprünge (2) und die Aussparungen (3) identische geometrische Formen besitzen.

3. Lauffläche nach Anspruch 2, dadurch gekennzeichnet,
daß der Einschnitt (1) auf der Lauffläche (10) bzw. auf jeder Oberfläche parallel zur genannten Oberfläche der Lauffläche (10) und in der Tiefe auf jeder Ebene senkrecht zur Oberfläche der Lauffläche und in mittlerer Ausrichtung der Spur auf der Lauffläche gewellte Spuren (OA, OB) darbietet, deren jeweilige Amplituden untereinander gleich sind und α betragen, und deren jeweilige Längen untereinander gleich sind und λ betragen, wobei die Vorsprünge (2) und die Aussparungen (3) jeweils mit einer Basis (b_{S}, b_{C}) und vier Stirnflächen ausgebildet sind, die zum Scheitel hin konvex gekrümmt sind und zur Basis hin konkav werden.

4. Lauffläche nach Anspruch 3, dadurch gekennzeichnet,
daß, die Spuren kreisförmig gewellt sind.

5. Lauffläche nach Anspruch 3, dadurch gekennzeichnet, daß die Spuren sinusförmig gewellt sind.

6. Lauffläche nach Anspruch 2, dadurch gekennzeichnet,
daß die Spuren (OA, OB) des Einschnitts (1) einerseits auf der Lauffläche (10) und andererseits in der Tiefe zickzackförmige Spuren mit derselben Wellenlänge λ und derselben Amplitude α aufweisen, wobei die Vorsprünge (2) und Aussparungen (3) Tetraeder mit abgerundeten Scheiteln sind.

7. Lauffläche nach Anspruch 1, dadurch gekennzeichnet,
daß der Einschnitt (1) an der Oberfläche der Lauffläche eine Spur OA aufweist, die kreisförmig, sinusförmig oder sonstwie gewellt oder zickzackförmig ist, eine Amplitude α_{A} und eine Wellenlänge λ_{A} aufweist, und in der Tiefe eine Spur OB, die mit der Spur OA nicht identisch ist und sich durch ihre Wellenlänge λ_{B} und/oder durch ihre Amplitude α_{B} unterscheidet.

8. Lauffläche nach Anspruch 1, dadurch gekennzeichnet,
daß der Einschnitt (1) an der Oberfläche der Lauffläche eine kreisförmig, sinusförmig oder sonstwie gewellte oder zickzackförmige Spur OA aufweist, deren Amplitude α_{A} und Wellenlänge λ_{A} über die gesamte Länge der Spur Konstante sind, und in der Tiefe eine gewellte oder zickzackförmige Spur OB, deren Amplitude α_{B} jedoch in Funktion der Tiefe abnimmt, und dies bei konstanter Wellenlänge λ_{B}.

9. Lauffläche nach Anspruch 1, dadurch gekennzeichnet,
daß die Vorsprünge (2) und Aussparungen (3) mit vierseitiger Basis jeweils vier völlig konvex gekrümmte Flächen aufweisen.

10. Lauffläche nach Anspruch 1, dadurch gekennzeichnet,
daß die Vorsprünge (2) vier vollständig konvex gekrümmte Stirnflächen und die Aussparungen (3) vier vollständig konkave Stirnflächen aufweisen.
